# EUROPÄISCHE PATENTSCHRIFT

(11) **EP 2 423 539 B1**
(45) Veröffentlichungstag und Bekanntmachung des Hinweises auf die Patenterteilung: **02.04.2014**
(21) Anmeldenummer: 10174738.4
(22) Anmeldetag: 31.08.2010
(51) Int. Cl.: F16J 15/24, F16J 9/06, F16J 15/28, F16J 15/56, F16J 15/32, F16J 15/26, F16J 9/16

(54) **Dichtungsanordnung**
Seal arrangement
Agencement d'étanchéification

(43) Veröffentlichungstag der Anmeldung: 29.02.2012
(73) Patentinhaber: Burckhardt Compression AG, 8404 Winterthur (CH)
(72) Erfinder: Feistel, Norbert, 8548, Ellikon a.d. Thur (CH)
(74) Vertreter: Dr. Graf & Partner AG

(56) Entgegenhaltungen:
- EP-A2- 1 798 454
- WO-A1-90/05256
- WO-A1-97/00394
- WO-A1-97/00396
- US-A- 3 999 767

## Beschreibung

Die Erfindung betrifft eine Dichtungsanordnung für Kolbenkompressoren.

### Stand der Technik

Es ist bekannt die oszillierend beweglich gelagerte Kolbenstange von Kreuzkopfkolbenkompressoren mit Hilfe von trocken laufenden oder geschmierten Reibdichtelementen abzudichten. Die Abdichtung entlang der Kolbenstange erfolgt über so genannte Packungen, die üblicherweise in Form einer Reihenschaltung von ein- oder mehrteiligen Dichtelementen aufgebaut sind.

Die unterschiedlichen Varianten von Packungen mit Dichtungsanordnungen lassen sich grob in Dichtungsanordnungen mit ein- und mehrteiligen Dichtringen unterteilen.

Die Druckschrift WO 97/00397 offenbart einen mehrteiligen Dichtring, der aus drei Segmenten besteht. Diese Segmente unterliegen während des Betriebs einem Verschleiss, wobei die Segmentierung des Dichtrings zur Folge hat, dass der Anpressdruck der Segmente auf die Kolbenstange und somit die Dichtwirkung trotz des Verschleisses dank einer Selbstnachstellung der Segmente bis zu einer vorgegebenen Verschleissgrenze erhalten bleibt. Ein derartiger mehrteiliger Dichtring weist somit eine Verschleisskompensation auf, indem sich die Segmente abhängig vom Verschleiss selbsttätig verschieben.

Die Druckschrift WO 97/00396 offenbart einen einteiligen Dichtring, der als Kolbenstangendichtungsanordnung geeignet ist. Dieser Dichtring umfasst einen einzelnen einteiligen Ring mit einem Stoss. Bei diesem Dichtring erfolgt die Verschleisskompensation durch eine elastische und/oder plastische Deformation des Dichtrings.

Die Dichtringe einer Kolbenstangenpackung werden im unbelasteten Zustand zum Beispiel durch eine Schlauchfeder an die Kolbenstange angedrückt. Während des Betriebs des Kompressors erfolgt durch den am Dichtring anliegenden Differenzdruck eine zusätzliche Anpressung des Dichtrings an die Kolbenstange. Insbesondere bei segmentierten, aber auch bei einstückigen Dichtringen mit einem Stoss, bewirkt der am Dichtring angreifende Wechseldruck eine elastische und / oder plastische Deformation des Dichtrings beziehungsweise der einzelnen Segmente, was unter anderem einen ungleichen Materialabtrag entlang des Umfangs des Dichtrings zur Folge hat. Diese Effekte treten insbesondere bei unmittelbar zum Verdichtungsraum hin angeordneten Dichtungsanordnungen auf, da diese Dichtungsanordnungen üblicherweise mit einer zeitlich schwankenden Druckdifferenz belastet werden. Die Belastung hat zur Folge, dass diese Dichtungsanordnung eine rasch nachlassende Dichtwirkung aufweist, und dass abhängig vom verwendeten Material der Dichtringe ein Fliessen respektive ein Bruchversagen der Dichtungsanordnung auftritt.

Bekannte Dichtungsanordnungen weisen somit den Nachteil auf, dass diese unter Umständen eine rasch nachlassende Dichtwirkung beziehungsweise einen relativ hohen Verschleiss aufweisen. US 3 999 767 offenbart eine Dichtungsanordnung bestehend aus einem endlosen Ringträger und aus zwei Dichtringen mit je einer Stossstelle, wobei die zwei Dichtringe den endlosen Ringträger von aussen umschliessen. Derartige Dichtringe weisen einen relativ hohen Verschleiss auf.

### Darstellung der Erfindung

Aufgabe der Erfindung ist es eine wirtschaftlich vorteilhaftere Dichtungsanordnung zu bilden.

Diese Aufgabe wird gelöst mit einer Dichtungsanordnung aufweisend die Merkmale von Anspruch 1. Die abhängigen Ansprüche 2 bis 15 offenbaren weitere, vorteilhafte Ausführungsformen.

Die Aufgabe wird insbesondere gelöst mit einer Dichtungsanordnung umfassend einen verformbaren Ringträger sowie einen ersten und einen zweiten endlosen Dichtring, wobei der Ringträger eine senkrecht zu dessen Umfangsrichtung verlaufende Längsachse aufweist, und wobei der Ringträger in dessen Umfangsrichtung einen Spalt mit Spiel aufweist, und wobei jeder Dichtring eine senkrecht zu dessen Umfangsrichtung verlaufende Längsachse aufweist, und wobei die Dichtringe derart angeordnet sind, dass der Ringträger diese von aussen umschliesst, und wobei die beiden Dichtringe in Verlaufsrichtung der Längsachse nebeneinander angeordnet sind, und wobei der Ringträger und die Dichtringe derart gegenseitig angepasst ausgestaltet sind, dass der erste Dichtring auf der einen Seite an einer ersten Seitenwand des Ringträger anliegt und auf der bezüglich der Längsachse des ersten Dichtringes gegenüberliegenden Seite einen ersten Spalt zum Ringträger ausbildet, und wobei der zweite Dichtring gegengleich auf der einen Seite an einer zweiten Seitenwand des Ringträger anliegt und auf der bezüglich der Längsachse des zweiten Dichtringes gegenüberliegenden Seite einen zweiten Spalt zum Ringträger ausbildet, wobei die erste und zweite Seitenwand bezüglich der Längsachse gegenüberliegend angeordnet sind, sodass der Ringträger über die erste beziehungsweise zweite Seitenwand je eine Vorspannkraft auf den ersten beziehungsweise zweiten Dichtring bewirken kann, wobei die Vorspannkräfte in Verlaufsrichtung des Schnittes entgegengesetzt verlaufen.

Es wurde erkannt, dass die bei bekannten Dichtungsanordnungen zur Verschleisskompensation erforderlichen Stösse unter der durch Druckänderungen und Druckdifferenzen verursachten Belastung eine Instabilität des Dichtrings zur Folge haben, was einen erhöhten Verschleiss am Dichtring sowie an der gesamten Dichtungsanordnung zur Folge hat. Die erfindungsgemässe Dichtungsanordnung weist den Vorteil auf, dass die eigentlichen Dichtringe keine Stösse mehr aufweisen indem die Dichtringe als endlose Dichtringe ausgestaltet sind. Das heisst der Dichtring verläuft über 360° und weist keinen Spalt oder Stoss auf sondern ist über einen Vollkreis von 360° durchgängig ausgestaltet. Die erfindungsgemässe Dichtungsanordnung mit Dichtringen ohne Stösse weist somit dem Vorteil auf, dass die am Dichtring angreifenden Druckänderungen und Druckdifferenzen keine oder eine nur sehr geringe Instabilität des Dichtringes zur Folge haben, sodass der Dichtring im Vergleich zu bekannten Dichtungsanordnungen einen wesentlich geringeren Verschleiss aufweist.

Um eine zu bekannten Reibdichtungsanordnungen vergleichbare Dichtwirkung zu erzielen weist die erfindungsgemässe Dichtungsanordnung zum Abdichten einer Kolbenstange eines Kolbenkompressors zwei endlose Dichtringe auf, wobei diese beiden Dichtringe in Verlaufsrichtung der Kolbenstange nebeneinander angeordnet sind und in einem gemeinsamen Ringträger gehalten sind, und wobei die beiden Dichtringe sowie der Ringträger derart gegenseitig angepasst ausgestaltet sind, dass die beiden Dichtringe zur Verschleisskompensation in entgegen gesetzter Richtung verschiebbar im Ringträger gelagert sind. Die erfindungsgemässe Dichtungsanordnung ermöglicht es somit zwei endlose Dichtringe zur reibenden Dichtung zu verwenden, wobei diese beiden Dichtringe währen dem Betrieb einen Verschleiss aufweisen, und der Ringträger deshalb derart ausgestaltet ist, dass dieser eine Verschleisskompensation ausführen kann. Der Ringträger ist in einer bevorzugten Ausführungsform derart ausgestaltet, dass dieser die beiden Dichtringe derart umschliesst, dass die beiden Dichtringe in entgegen gesetzter Richtung verschiebbar gelagert sind. In einer bevorzugten Ausführungsform weist der Ringträger in Umfangsrichtung einen Spalt auf, wobei der Ringträger aus einem verformbaren Material gebildet ist und elastisch oder plastisch verformbar ausgestaltet ist, was zur Folge hat, dass der Ringträger seinen Durchmesser in radialer Richtung verändern kann, und dadurch eine Kraft beziehungsweise eine Verschiebung auf die beiden Dichtringe bewirken kann. In einer bevorzugten Ausgestaltung umfasst die Dichtungsanordnung eine Schlauchfeder oder einen Spannring, welcher den Ringträger an dessen Umfang umschliesst, um zumindest im unbelasteten Zustand eine Kraft auf die Dichtringe zu bewirken und somit zu gewährleisten, dass diese auch im unbelasteten Zustand mit der Kolbenstange in Kontakt bleiben.

In einer vorteilhaften Ausgestaltung weist der Ringträger einen Stoss auf, wobei die Dichtringe derart im Ringträger angeordnet und gegenseitig verschiebbar gehalten sind, dass die Verschieberichtung der beiden Dichtringe orthogonal beziehungsweise senkrecht zu Verlaufsrichtung des Stosses ausgerichtet ist.

Der Kontakt der beiden Dichtringe mit der beweglichen Kolbenstange sowie die auf Grund des Verschleisses der Dichtringe erforderliche Verschleisskompensation der erfindungsgemässen Dichtungsanordnung, bei welcher sich die beiden Dichtringe in entgegen gesetzter Richtung verschieben, hat zur Folgen, dass jeder Dichtring nur über einem Winkel von 180 Grad oder im wesentlichen 180 Grad einen Reibkontakt zur Kolbenstange aufweist, und somit nur entlang dieses Winkels am Kolbenstangenumfang anliegt. An jedem der zwei Dichtringe erfolgt somit ein asymmetrischer Materialabtrag, was zur Folge hat, dass sich diese während dem Betrieb beziehungsweise während dem Verschleiss aufeinander zu bewegen. Der Ringträger sowie die beiden Dichtringe sind in einer besonders vorteilhaften Ausführungsform derart gegenseitig angepasst ausgestaltet, dass der maximal zulässige Verschleissweg der Dichtringe begrenzt ist, was zum Beispiel durch exzentrisch im Ringträger eingearbeitet Nuten möglich ist. Sobald der Punkt des maximal zulässigen Verschleisswegs erreicht ist übt der Ringträger nicht mehr die in entgegen gesetzter Richtung wirkenden Kräften auf die Dichtringe aus. Sobald der maximal zulässige Verschleissweg der Dichtringe erreicht ist ändert sich somit die Dichtfunktion der Dichtungsanordnung von einer Reibdichtung in eine Spaltdichtung, vorzugsweise eine berührungsfreie Spaltdichtung.

Die erfindungsgemässe Dichtungsanordnung weist unter anderem den Vorteil auf, dass die Dichtringe endlos ausgestaltet sind, das heisst, dass die Dichtringe keinen Schnitt oder Spalt aufweisen, weshalb die Dichtringe eine hohe Steifigkeit aufweisen, sodass die am Dichtring angreifenden Druckkräfte eine geringere Deformation bewirken, was wiederum zur Folge hat, dass sich der Verschleiss reduziert. Zudem benötigen die Dichtringe auch keine elastische oder plastische Verformbarkeit zur Verschleisskompensation, wie dies bei bisher bekannten Dichtringen erforderlich war. Dies ermöglicht eine Dichtungsanordnung mit geringem Verschleiss auszubilden.
In der erfindungsgemässen Dichtungsanordnung ist die Verschleissrichtung der beiden Dichtringe durch den Ringträger vorgegeben, zum Beispiel durch exzentrische gestaltete Nuten welche die Dichtringe halten, sodass in der Dichtungsanordnung keine Verdrehsicherung durch einen Fixierstift erforderlich ist, sodass die Dichtungsanordnung günstig und zuverlässig ausgestaltet werden kann.

In einer weiteren vorteilhaften Ausführungsform ist der Ringträger der Dichtungsanordnung derart ausgebildet, dass die beiden Dichtringe in axialer Richtung durch den Ringträger in einer gegenseitig beabstandeten Lage gehalten werden, indem der Ringträger einen Abstandhaltering aufweist, der zwischen den Dichtringen angeordnet ist. In einer besonders vorteilhaften Ausführungsform ist der Abstandhaltering derart ausgestaltet, dass dessen Innenseite nahe der Kolbenstange zu liegen kommt oder an der Kolbenstange anliegt und somit ebenfalls eine Dichtfunktion ausübt. Falls der Abstandhaltering an der Kolbenstange anliegt, so ergibt sich entlang der Kolbenstange ein Reibkontakt, indem der erste Dichtring einen 180 Grad-Kontakt zur Kolbenstange aufweist, danach der Abstandhaltering einen Reibkontakt zur Kolbenstange aufweist, und danach der zweite Dichtring einen 180 Grad-Kontakt zur Kolbenstange aufweist. In dieser Ausführungsform bewirkt der Ringträger eine druckentlastende Funktion für die Dichtringe. Zudem sind die Dichtringe in seitlicher Richtung durch den Abstandhaltering geführt.

Für den Einsatz in ölfreien Kolbenkompressoren sind die Dichtringe vorzugsweise aus trocken laufenden Materialien wie gefülltes PTFE oder speziell für Trockenlauf modifizierte Polymerblends oder Hochtemperaturpolymere wie PEEK oder PI sowie spezielle Sinterbronze gefertigt. Für den Einsatz in geschmierten Kolbenkompressoren bestehen die Dichtringe zum Beispiel aus gefüllten Kunststoffen und Faserverbundmaterialien oder auch aus Metall wie beispielsweise Blei- oder Zinnbronze.
Der Ringträger ist vorzugsweise aus einem Kunststoff wie beispielsweise PEEK gefertigt. Falls der Ringträger einen Kontakt mit der Kolbenstange aufweist, so ist vorzugsweise ein modifizierter Kunststoff enthaltend Festschmierstoffe wie beispielsweise Graphit oder PTFE geeignet.

Die Erfindung wird nachfolgend an Hand von Ausführungsbeispielen im Detail erläutert.

### Kurze Beschreibung der Zeichnungen

Die zur Erläuterung der Ausführungsbeispiele verwendeten Zeichnungen zeigen:
- Fig. 1: eine Frontansicht einer Dichtungsanordnung;
- Fig. 2: einen Schnitt der Figur 1 entlang der Schnittlinie A-A;
- Fig. 3: einen Dichtring;
- Fig. 4: eine Seitenansicht des Dichtrings gemäss Figur 3;
- Fig. 5: einen Spannring;
- Fig. 6: eine an einer Kolbenstange angeordnete Dichtungsanordnung;
- Fig. 7: einen Schnitt durch eine Kolbenstange mit daran angeordnetem Dichtring entlang der Schnittlinie B-B;
- Fig. 8: einen Schnitt durch eine Kolbenstange wobei die Dichtringe einen Verschleiss aufweisen;
- Fig. 9: einen Schnitt durch Figur 8 entlang der Schnittlinie C-C;
- Fig. 10: einen Schnitt durch eine weitere Dichtungsanordnung;
- Fig. 11: einen Schnitt durch einen Ringträger entlang der Schnittlinie D-D;
- Fig. 12: eine Frontansicht des in Figur 11 dargestellten Ringträgers;
- Fig. 13: eine Frontansicht eines weiteren Ringträgers;
- Fig. 14: einen Dichtring für den in Figur 13 dargestellten Ringträger.

Grundsätzlich sind in den Zeichnungen gleiche Teile mit gleichen Bezugszeichen versehen.

### Wege zur Ausführung der Erfindung

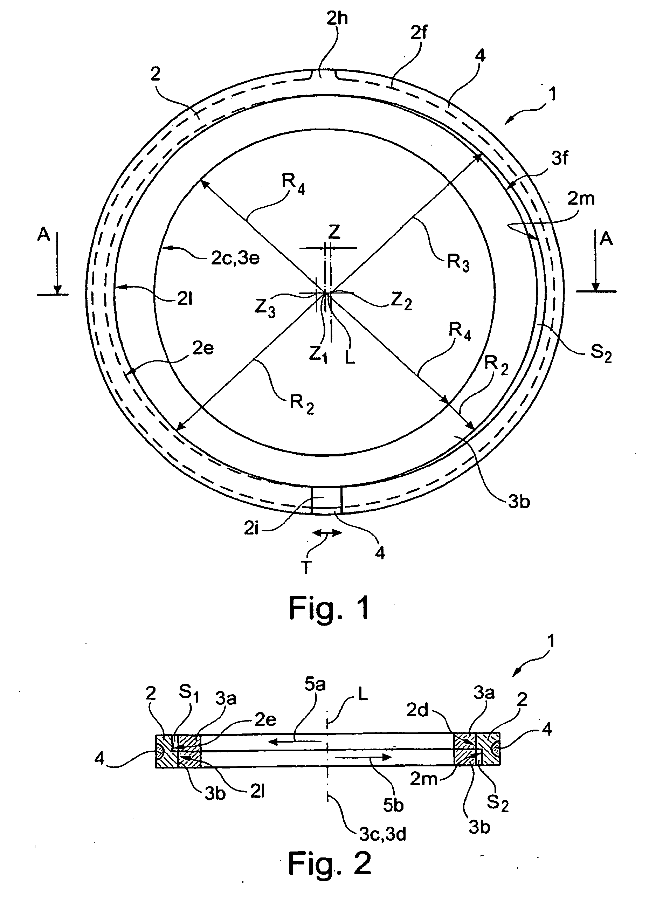

Figur 1 zeigt in einer Aufsicht und in Figur 2 in einem Schnitt entlang der Schnittlinie A-A eine Dichtungsanordnung 1 umfassend einen elastisch oder plastisch verformbaren Ringträger 2 sowie einen ersten und einen zweiten endlosen Dichtring 3a,3b, welche im Ringträger 2 angeordnet sind. Unter einem endlosen Dichtring wird ein über 360° verlaufender Ring verstanden, der somit keinen Spalt beziehungsweise keine Stossstelle aufweist. Der Ringträger 2 weist eine senkrecht zu dessen Umfangsrichtung verlaufende Längsachse L aufweist. Der Ringträger 2 weist zudem in dessen Umfangsrichtung einen Spalt 2i mit Spiel T auf. Jeder Dichtring 3a,3b weist eine senkrecht zu dessen Umfangsrichtung verlaufende Längsachse 3c,3d aufweist. Die Dichtringe 3a,3b sind derart angeordnet, dass der Ringträger 2 diese von aussen umschliesst, wobei die beiden Dichtringe 3a,3b wie aus Figur 2 ersichtlich in Verlaufsrichtung der Längsachse L unmittelbar nebeneinander liegend angeordnet sind. Der Ringträger 2 und die Dichtringe 3a,3b sind in einem Neuzustand, das heisst ohne oder mit nur geringem Verschleiss und anliegend an eine Kolbenstange 6, derart gegenseitig angepasst ausgestaltet, dass der erste Dichtring 3a auf der einen Seite an einer ersten Seitenwand 2d des Ringträger 2 anliegt und auf der bezüglich der Längsachse 3c des ersten Dichtringes 3a gegenüberliegenden Seite einen ersten Spalt S1 zum Ringträger 2 ausbildet, und dass der zweite Dichtring 3b gegengleich auf der einen Seite an einer zweiten Seitenwand 21 des Ringträger 2 anliegt und auf der bezüglich der Längsachse 3d des zweiten Dichtringes 3b gegenüberliegenden Seite einen zweiten Spalt S2 zum Ringträger 2 ausbildet, wobei die erste und zweite Seitenwand 2d,21 bezüglich der Längsachse L gegenüberliegend angeordnet sind, sodass der Ringträger 2 über die erste beziehungsweise zweite Seitenwand 2d,21 je eine Vorspannkraft 5a,5b auf den ersten beziehungsweise zweiten Dichtring 3a,3b bewirken kann, wobei die Vorspannkräfte 5a,5b in Verlaufsrichtung des Schnittes A entgegengesetzt verlaufen. Die vorhin beschriebene Anordnung des Ringträgers 2 sowie der beiden Dichtringe 3a,3b gilt insbesondere im Neuzustand sowie solange die Dichtringe 3a,3b keinen oder nur einen geringen Verschliess aufweisen. Im Neuzustand sind die Dichtringe 3a,3b in einer Ausgangslage entlang einer Kolbenstange 6 angeordnet, wobei die beiden Dichtringe 3a,3b vorzugsweise derart an der Kolbenstange 6 anliegend angeordnet sind, dass die Längsachsen 3c,3d identisch verlaufen. Im dargestellten Ausführungsbeispiel weist der Ringträger 2 eine Ausnehmung 2f auf, in welcher ein Spannring 4 angeordnet ist und den Ringträger 2 umschliesst. Der Ringträger 2 weist einen Steg 2h auf, um ein Verdrehen des Spannrings 4 bezüglich des Ringträgers 2 zu verhindern.

Die in den Figuren 1 und 2 dargestellte Dichtungsanordnung 1 zeigt den als ringförmiger Körper ausgestalteten Ringträger 2 mit Spalt 2i. Die Ansicht gemäss Figur 1 zeigt insbesondere den zweiten Dichtungsring 3b sowie den diesen umschliessenden Ringträger 2. Der Ringträger 2 weist auf dessen Innenseite derart ausgestaltete Seitenwände auf, dass diese die entgegengesetzt wirkenden Vorspannkräfte 5a, 5b auf den ersten beziehungsweise zweiten Dichtring 3a, 3b bewirken, wobei der Spannring 4 eine Vorspannkraft auf den Ringträger 2 ausübt. In der dargestellten Ansicht gemäss Figur 1 weist der Ringträger 2 auf der links dargestellten Innenseite eine halbkreisförmig verlaufende zweite Seitenwand 21 mit Zentrum Z1 und Radius R2 auf. Zudem weist der Ringträger 2 auf der rechts dargestellten Innenseite eine halbkreisförmig verlaufende zweite beabstandete Seitenwand 2m mit Zentrum Z2 und Radius R3 auf, wobei im dargestellten Ausführungsbeispiel die Radien R2 und R3 identisch sind. Die beiden Zentren Z1 und Z2 sind um eine Distanz Z gegenseitig beabstandet, wobei die Distanz Z je nach Ausführungsform des Ringträgers 2 beziehungsweise je nach dem maximal zulässigen Verschleiss der Dichtringe 3a,3b einen Wert zwischen 0, 1und 10 mm aufweisen kann. Um den aus der Sicht gemäss Figur 1 hinten angeordneten ersten Dichtungsring 3a zu halten weist der Ringträger 2, wie aus den Figuren 1 und 2 ersichtlich, eine bezüglich der zweiten Seitenwand 21 und der zweiten beabstandeten Seitenwand 2m derart gegengleich ausgestaltete erste Seitenwand 2d und erste beabstandete Seitenwand 2e auf, dass die erste Seitenwand 2d halbkreisförmig ausgestaltet ist mit Zentrum Z1 und Radius R2, und dass die erste beabstandete Seitenwand 2e halbkreisförmig ausgestaltet ist mit Zentrum Z3 und Radius R3, wobei die Radien R2 und R3 im dargestellten Ausführungsbeispiel wiederum identisch sind. Die beiden Zentren Z1 und Z3 sind wiederum um die Distanz Z gegenseitig beabstandet.

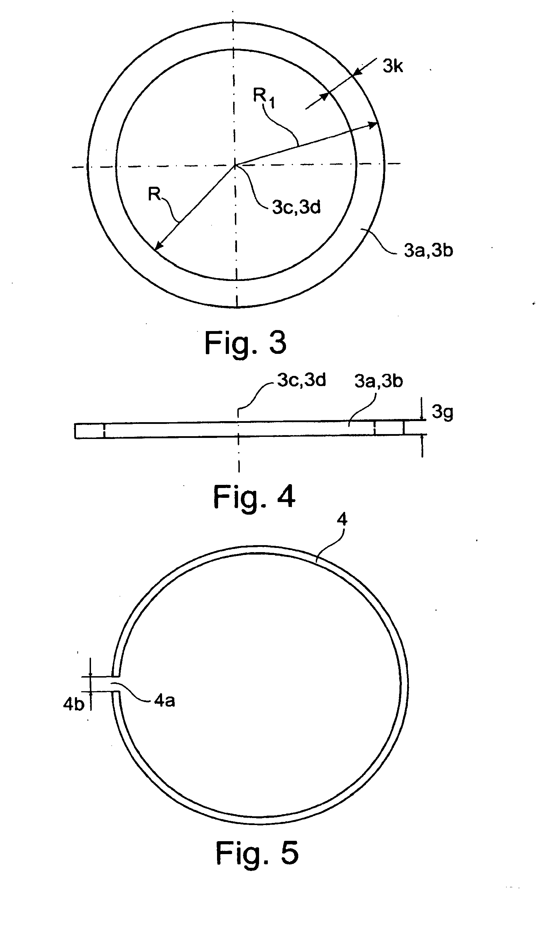

Figur 3 zeigt in einer Draufsicht den endlosen Dichtungsring 3a beziehungsweise 3b mit Mittenachse 3c,3d, Innenradius R, Aussenradius R1 und Ringbreite 3k. Figur 4 zeigt in einer Seitenansicht den endlosen Dichtungsring 3a, 3b mit Breite 3g.

Figur 5 zeigt in einer Draufsicht den Spannring 4 mit Spalt 4a und Spaltbreite 4b.

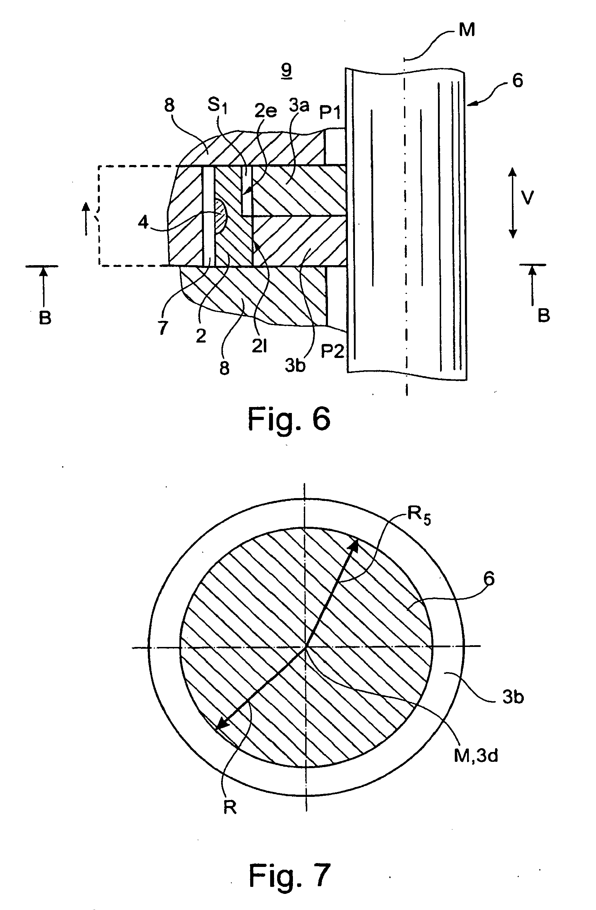

Figur 6 zeigt eine in Bewegungsrichtung v bewegliche Kolbenstange 6 mit Längsachse M. Zudem zeigt Figur 6 in einem Teillängsschnitt die linke Hälfte einer Dichtungsanordnung 1, welche in einem

Kammerring 8 mit Dichtungskammer 7 angeordnet ist, wobei P1 die Seite mit höherem Druck und P2 die Seite mit niedrigerem Druck darstellt. Figur 6 zeigt eine ähnliche, wie in Figur 1 und 2 dargestellte Dichtungsanordnung 1, wobei sich die in Figur 6 dargestellte Dichtungsanordnung 1 ebenfalls im Neuzustand befindet. Die Ausgestaltung sowie die Funktionsweise dieser Dichtungsanordnung 1 wurde bereits mit Hilfe von Figur 2 beschrieben.

Figur 7 zeigt einen Schnitt durch eine Kolbenstange 6, beispielsweise entlang der Schnittlinie B-B gemäss Figur 6, mit an der Kolbenstange 6 anliegendem Dichtungsring 3b im Neuzustand. Die Längsachse M der Kolbenstange 6 verläuft identisch oder beinahe identisch zur Mittenachse 3d des Dichtrings 3b. Der Innenradius R des Dichtringes 3b ist grösser oder gleich dem Radius R5 der Kolbenstange.

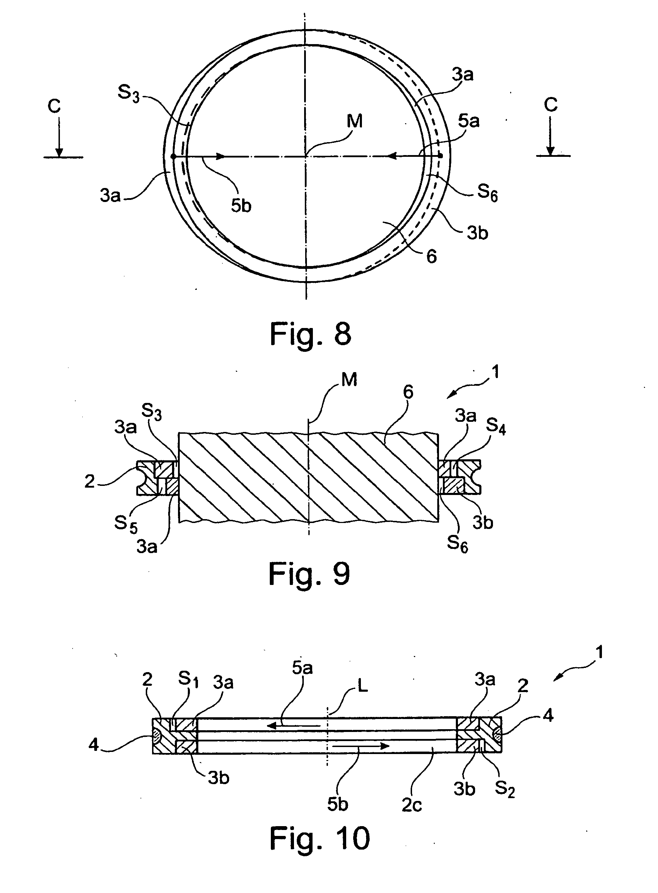

Figur 8 zeigt die in Figur 7 dargestellte Ansicht nach einer gewissen Betriebsdauer, während welcher die Dichtringe 3a,3b einem Verschleiss unterliegen. Die auf den zweiten Dichtring 3b wirkende Vorspannkraft 5b hat zur Folge, dass der zweite Dichtring 3b in der Darstellung gemäss Figur 8 auf der Innenfläche der linken Seite verschleisst, wobei diese Innenfläche an der Oberfläche der Kolbenstange 6 anliegt, sodass sich auf der rechten Seite zwischen der Kolbenstange 6 und dem zweiten Dichtring 3b ein Spalt S6 ausbildet. Der erste Dichtungsring 3a erfährt einen bezüglich dem zweiten Dichtring 3a gegengleichen Verschleiss und führt daher eine gegengleiche Bewegung in Richtung der Vorspannkraft 5a aus, sodass sich zwischen der Kolbenstange 6 und dem ersten Dichtring 3a ein Spalt S3 ausbildet. Figur 9 zeigt einen Schnitt entlang der in Figur 8 dargestellten Schnittlinie C-C, wobei in Figur 9 zudem noch der den ersten und zweiten Dichtring 3a,3b umschliessende Ringträger 2 dargestellt ist. Der Verschleiss des ersten und zweiten Dichtringes 3a,3b hat zur Folge, dass sich die Spalten S3, S4, S5 und S6 ausbilden, wobei die Dichtungsanordnung 1, wie aus Figur 9 ersichtlich, trotz dieser Spalten S3, S4, S5 und S6 in Längsrichtung M der Kolbenstange L eine ausgezeichnete Dichtwirkung aufweist. In Figur 9 haben der erste und zweite Dichtring 3a, 3b den maximal zulässigen Verschleissweg erreicht, was daraus erkennbar ist, dass der erste Dichtring 3a in der dargestellten Ansicht links am Ringträger 2 anliegt, und somit nicht mehr weiter nach links verschoben werden kann. Gegengleich dazu liegt der zweite Dichtring 3b rechts am Ringträger 2 an und kann somit auch nicht mehr weiter nach rechts verschoben werden. Sobald die Dichtringe 3a,3b den maximal möglichen Verschleissweg erreicht haben ändert sich die Dichtfunktion der Dichtungsanordnung 1 von einer Reibdichtung in eine Spaltdichtung, vorzugsweise in eine berührungsfreie Spaltdichtung.

Figur 10 zeigt in einem Schnitt ein weiteres Ausführungsbeispiel einer Dichtungsanordnung 1. Im Unterschied zu der in Figur 2 dargestellten Dichtungsanordnung 1 weist die Dichtungsanordnung 1 gemäss Figur 10 einen Ringträger 2 mit einem als Zwischenwand ausgestalteten Ringteil 2k auf, an welchen die beiden Dichtringe 3a, 3b anliegen, sodass die beiden Dichtringe 3a, 3b in Richtung der Längsachse L gegenseitig beabstandet angeordnet sind. Das Ringteil 2k wird auch als Abstandhaltering 2k bezeichnet.

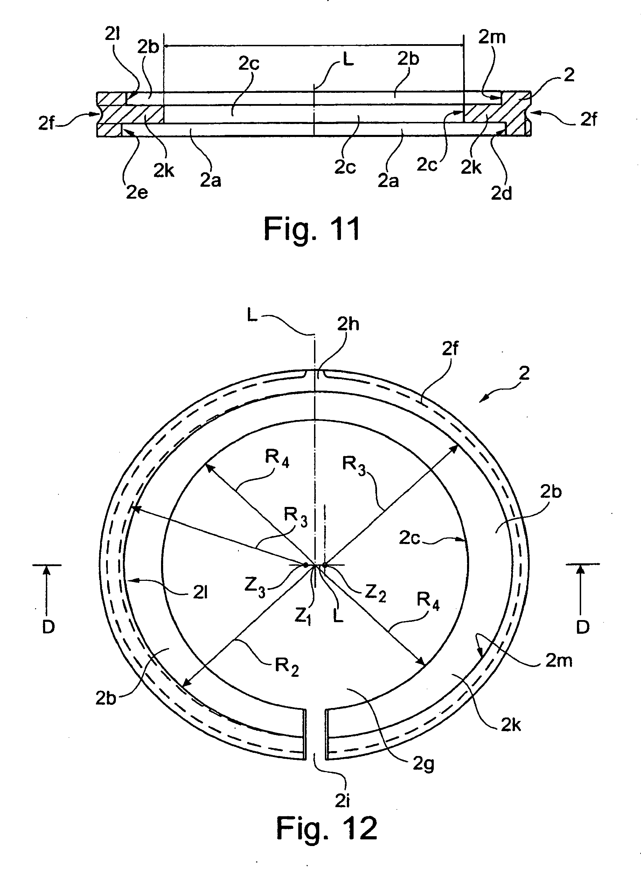

Figur 12 zeigt eine Draufsicht eines ähnlichen, wie in Figur 10 dargestellten Ringträgers 2. Figur 11 zeigt einen Schnitt entlang der Schnittlinie D-D gemäss Figur 12. Der Ringträger 2 weist eine Ausnehmung 2a für den ersten Dichtring 3a sowie eine Ausnehmung 2b für den zweiten Dichtring 3b auf. Der Ringträger 2 weist zudem ein Ringteil 2k beziehungsweise einen Zwischensteg 2k auf, mit einer Ausnehmung 2c für die Kolbenstange 6, wobei die Ausnehmung wie dargestellt vorzugsweise eine gegen die Kolbenstange 6 ausgerichtete Fläche aufweist, wobei das Ringteil 2k vorzugsweise derart ausgestaltet ist, dass sich zwischen Ringteil 2k und Kolbenstange 6 ein Spalt ausbildet, sodass eine Spaltdichtung ausgebildet wird. In einer bevorzugten Ausgestaltung weist der Zwischensteg 2k einen Innendurchmesser auf, der im wesentlichem dem Innendurchmesser R des ersten und zweiten Dichtrings 3a,3b entspricht. Der Verlauf der Nuten zur Aufnahme des ersten und zweiten Dichtringes 3a,3b ist insofern identisch wie in Figur 1 dargestellt ausgestaltet, als die Ausnehmung 2b für den zweiten Dichtring 3b eine halbkreisförmig verlaufende zweite Seitenwand 21 mit Krümmungsradius R2 und Zentrum Z1 aufweist sowie eine halbkreisförmig verlaufende beabstandete Seitenwand 2m mit Krümmungsradius R3 und Zentrum Z2. Dazu gegengleich ausgestaltet ist die Ausnehmung 2a für den ersten Dichtring 3a mit einer halbkreisförmig verlaufenden ersten Seitenwand 2d mit Krümmungsradius R2 und Zentrum Z1 sowie einer halbkreisförmig verlaufenden beabstandeten Seitenwand 2e mit Krümmungsradius R3 und Zentrum Z3, wobei die Zentren Z3 und Z2 bezüglich dem Zentrum Z1 denselben Abstand aufweisen. Auf Grund dieser Anordnung der Dichtringe 3a,3b im Ringträger 2 wird, wie in den Figuren 1 und 2 beschrieben, eine Vorspannkraft 5a,5b auf die Dichtringe 3a,3b bewirkt, sodass sich die Dichtringe 3a,3b auf Grund des mit der Zeit auftretenden Verschleisses relativ zum Ringträger 2 bewegen, wie in den Figuren 8 und 9 dargestellt. Das Ringteil 2k weist unter anderem den Vorteil auf, dass dieses eine stützende Seitenfläche für den Dichtring 3a,3b ausbildet, sodass diese bei angreifenden Wechsellasten besser geführt ist. Zudem kann das Ringteil 2k zusammen mit der Kolbenstange 6 in Längsrichtung L eine Spaltdichtung ausbilden.

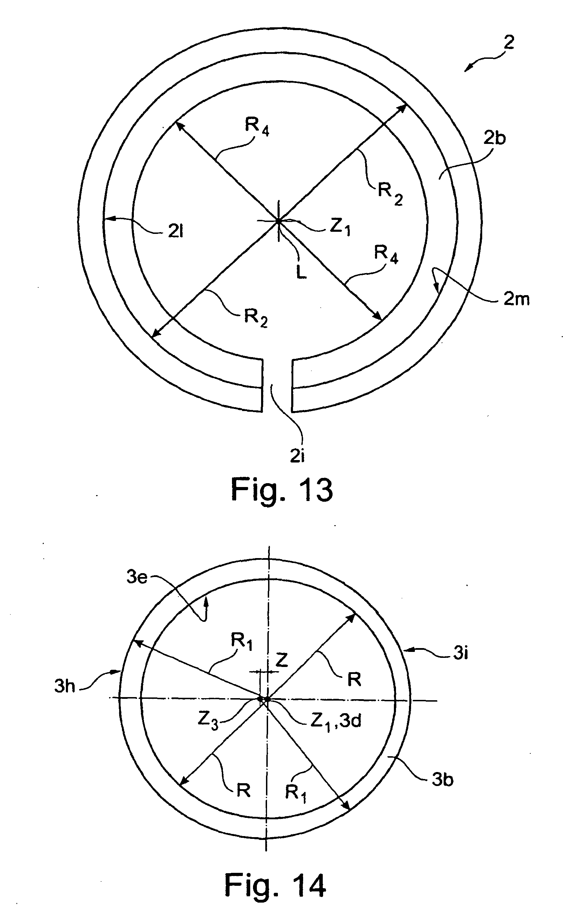

Figur 13 zeigt ein weiteres Ausführungsbeispiel eines Ringträgers 2 und Figur 14 zeigt einen zu diesem Ringträger 2 angepassten zweiten Dichtungsring 3b. Im Unterschied zu der in Figur 1 dargestellten Ausführungsform weist der in Figur 13 dargestellte Ringträger 2 einen Ausnehmung 2b mit einer kreisförmigen Seitenwand mit Zentrum Z1 und Radius R2 auf, sodass der zweite Seitenrand 21 und die beabstandete Seitenwand 2m kreisförmig verlaufen, mit demselben Zentrum Z1. Damit sich der zweite Dichtring 3b trotzdem in der Ausnehmung 2b des Ringträgers 2 verschieben kann, wie in Figur 1 und 2 beschrieben, ist der zweite Dichtring 3b wie in Figur 14 dargestellt ausgestaltet. Der zweite Dichtrings 3b weist eine erste, halbkreisförmige Aussenfläche 3h mit Zentrum Z1 und Radius R1 auf. Der zweite Dichtrings 3b weist zudem eine zweite, halbkreisförmige Aussenfläche 3i mit Zentrum Z3 und Radius R1 auf. Die beiden Zentren Z1 und Z3 sind gegenseitig um den Abstand Z beabstandet. Der zweite Dichtring 3b weist somit in Figur 14 auf der rechten Seite eine geringere Breite auf, was zur Folge hat, dass dieser Dichtring 3b, angeordnet in der Ausnehmung 2b des in Figur 13 dargestellten Ringträgers 2, im Neuzustand einen Spalt S2 zwischen der beabstandeten Seitenwand 2m des Ringträgers 2 und der zweiten halbkreisförmigen Aussenfläche 3i ausbildet. Der erste Dichtring 3a ist genau gleich ausgestaltet wie der in Figur 14 dargestellte zweite Dichtring 3b, wobei der erste Dichtring 3a derart gegengleich zum zweiten Dichtring 3b in dem in Figur 13 dargestellten Ringträger 2 angeordnet ist, dass sich im Neuzustand wie zum Beispiel in Figur 2 dargestellt auf der linken Seite ein Spalt S1 ausbildet.

Vorteilhafterweise weist der Ringträger 2 und/oder der Dichtring 3a,3b in der in den Figuren 13 und 14 dargestellten Ausführungsform eine nicht dargestellte Verdrehsicherung, zum Beispiel einen Bolzen auf, um die Lage des Dichtrings 3a,3b bezüglich dem Ringträger derart zu fixieren, dass keine gegenseitige Verdrehung auftritt.

Die Seitenwände 21, 2m der zur Aufnahme des ersten und zweiten Dichtringes 3a, 3b bestimmen Ausnehmungen 2a, 2b im Ringträger 2 sowie die Aussenflächen 3h,3i der Dichtringe 3a,3b können in einer Vielzahl von Möglichkeiten derart gegenseitig angepasst ausgestaltet sein, dass der Dichtring 3a,3b in Verlaufsrichtung der angreifenden Vorspannkraft 5a,5b verschiebbar im Ringträger 2 gelagert ist. Die Seitenwände 21,2m und/oder die Aussenfläche 3h,3i könnten beispielsweise auch als Polygonzug beziehungsweise als Vieleck ausgestaltet sein, oder könnten beispielsweise auch oval verlaufen.

Der Ringträger 2 sowie die Dichtringe 3a, 3b sind vorzugsweise derart gegenseitig angepasst ausgestaltet, dass der erste und/oder zweite Spalt S1, S2 im Neuzustand eine maximale Bereite im Bereich von 0,1 mm bis 10 mm aufweist, und vorzugsweise eine maximale Breite im Bereich von 1 mm bis 2 mm aufweist.

Die Dichtringe 3a,3b bestehen vorzugsweise aus einem verschleissbaren Material, insbesondere aus einem Metall wie Bronze, Grauguss oder Sintereisen oder aus einem Kunststoff wie PEEK, gefülltes PTFE oder Hochtemperaturpolymere wie PEEK, PI oder Epoxid. Der Ringträger 2 besteht aus einem Metall, insbesondere aus Stahl, Edelstahl, Bronze oder Grauguss, oder aus einem Kunststoff, insbesondere aus PEEK, gefülltes PTFE oder Hochtemperaturpolymere wie PEEK, PI oder Epoxid.

In Verlaufsrichtung einer Kolbenstange 6 können eine Mehrzahl von Dichtungsanordnungen 1 hintereinander liegend angeordnet sein.

## Patentansprüche

1. Dichtungsanordnung (1) für Kolbenkompressoren, umfassend einen verformbaren Ringträger (2) sowie einen ersten und einen zweiten endlosen Dichtring (3a,3b), wobei der Ringträger (2) eine senkrecht zu dessen Umfangsrichtung verlaufende Längsachse (L) aufweist, und wobei der Ringträger (2) in dessen Umfangsrichtung einen Spalt (2i) mit Spiel aufweist, und wobei jeder Dichtring (3a,3b) eine senkrecht zu dessen Umfangsrichtung verlaufende Längsachse (3c,3d) aufweist, und wobei die Dichtringe (3a,3b) derart angeordnet sind, dass der Ringträger (2) diese von aussen umschliesst, und wobei die beiden Dichtringe (3a,3b) in Verlaufsrichtung der Längsachse (L) nebeneinander angeordnet sind, und wobei der Ringträger (2) und die Dichtringe (3a,3b) derart gegenseitig angepasst ausgestaltet sind, dass der erste Dichtring (3a) auf der einen Seite an einer ersten Seitenwand (2d) des Ringträger (2) anliegt und auf der bezüglich der Längsachse (3c) des ersten Dichtringes (3a) gegenüberliegenden Seite einen ersten Spalt (S 1) zum Ringträger (2) ausbildet, und wobei der zweite Dichtring (3b) gegengleich auf der einen Seite an einer zweiten Seitenwand (21) des Ringträger (2) anliegt und auf der bezüglich der Längsachse (3d) des zweiten Dichtringes (3b) gegenüberliegenden Seite einen zweiten Spal (S2) zum Ringträger (2) ausbildet, wobei die erste und zweite Seitenwand (2d,21) bezüglich der Längsachse (L) gegenüberliegend angeordnet sind, sodass der Ringträger (2) über die erste beziehungsweise zweite Seitenwand (2d,21) je eine Vorspannkraft (5a,5b) auf den ersten beziehungsweise zweiten Dichtring (3a,3b) bewirken kann, wobei die Vorspannkräfte (5a,5b) entgegengesetzt verlaufen.

2. Dichtungsanordnung (1) nach Anspruch 1, **dadurch gekennzeichnet, dass** der erste und zweite Dichtring (3a,3b) in Verlaufsrichtung der Längsachse (L) unmittelbar nebeneinander angeordnet sind.

3. Dichtungsanordnung (1) nach Anspruch 1, **dadurch gekennzeichnet, dass** der Ringträger (2) zwischen dem ersten und dem zweiten Dichtring (3a, 3b) in Verlaufsrichtung der Längsachse (L) einen Zwischensteg (2k) aufweist.

4. Dichtungsanordnung (1) nach Anspruch 3, **dadurch gekennzeichnet, dass** der Zwischensteg (2k) einen Innendurchmesser aufweist, welcher im wesentlichen dem Innendurchmesser (R) des ersten und zweiten Dichtringes (3a,3b) entspricht.

5. Dichtungsanordnung (1) nach einem der vorhergehenden Ansprüche, **dadurch gekennzeichnet, dass** der erste und/oder zweite Dichtring (3a,3b) entlang des gesamten Umfangs dieselbe Breite (3k) aufweist, und dass der Ringträger (2) im Bereich des ersten und/oder zweiten Spaltes (S1, S2) eine bezüglich dem erste und/oder zweiten Dichtring (3a,3b) beabstandete erste und/oder zweite Seitenwand (2e, 2m) aufweist.

6. Dichtungsanordnung (1) nach einem der Ansprüche 1 bis 4 **dadurch gekennzeichnet, dass** die erste anliegende Seitenwand (2d) und eine erste beabstandete Seitenwand (2e) gemeinsam kreisförmig oder oval verlaufen, dass die zweite anliegende Seitenwand (21) und eine zweite beabstandete Seitenwand (2m) gemeinsam kreisförmig oder oval verlaufen, und dass der erste und/oder zweite Dichtring (3a,3b) in Umfangsrichtung eine derart variable Breite (3k) aufweist, dass zwischen dem ersten Dichtring (3a) und der ersten beabstandeten Seitenwand (2e) der erste Spalt (S1) ausgebildet ist, und dass zwischen dem zweiten Dichtring (3b) und der zweiten beabstandeten Seitenwand (2m) der zweite Spalt (S2) ausbildet.

7. Dichtungsanordnung (1) nach einem der Ansprüche 5 oder 6, **dadurch gekennzeichnet, dass** ein erstes Zentrum (Z1) sowie ein Krümmungsradius R2 einen halbkreisförmigen Verlauf der ersten anliegenden Seitenwand (2d) definiert, dass ein zweites Zentrum (Z2) sowie ein Krümmungsradius R3 einen halbkreisförmigen Verlauf der ersten beabstandeten Seitenwand (2e) definiert, und dass das erste und das zweite Zentrum (Z1, Z2)
gegenseitig beabstandet sind.

8. Dichtungsanordnung (1) nach Anspruch 7, **dadurch gekennzeichnet, dass** die beiden Krümmungsradien R2 und R3 identisch sind.

9. Dichtungsanordnung (1) nach einem der Ansprüche 7 oder 8, **dadurch gekennzeichnet, dass** die Distanz zwischen dem ersten und zweiten Zentrum (Z1, Z2) im Bereich zwischen 0,1 bis 10 mm liegt.

10. Dichtungsanordnung (1) nach einem der vorhergehenden Ansprüche, **dadurch gekennzeichnet, dass** der erste und/oder zweite Spalt (S 1, S2) eine maximale Breite im Bereich von 0,1 mm bis 10 mm aufweist.

11. Dichtungsanordnung nach einem der vorhergehenden Ansprüche, **dadurch gekennzeichnet, dass** die Dichtringe (3a,3b) aus einem verschleissbaren Material bestehen, insbesondere aus einem Metall wie Bronze, Grauguss oder Sintereisen oder aus einem Kunststoff wie PEEK, gefülltes PTFE oder Hochtemperaturpolymere wie PEEK, PI oder Epoxid.

12. Dichtungsanordnung (1) nach einem der vorhergehenden Ansprüche, **dadurch gekennzeichnet, dass** sich die erste und die zweite anliegende Seitenwand (2d, 21) über einen Winkel von 180 Grad oder etwa 180 Grad erstreckt, und dass sich der erste und der zweite Spalt (S1, S2) über einen Winkel von 180 Grad oder etwa 180 Grad erstreckt.

13. Dichtungsanordnung (1) nach einem der vorhergehenden Ansprüche, **dadurch gekennzeichnet, dass** der Innenradius (R) des Dichtrings (3a,3b) grösser oder gleich dem Aussenradius einer Kolbenstange (6) entspricht.

14. Dichtungsanordnung (1) nach einem der vorhergehenden Ansprüche, **dadurch gekennzeichnet, dass** ein Spannring (4) den Ringträger (2) in Umfangsrichtung von Aussen umschliesst.

15. Dichtungsanordnung (1) nach einem der vorhergehenden Ansprüche, **dadurch gekennzeichnet, dass** der Ringträger (2) aus einem Metall bestehen, insbesondere aus Stahl, Edelstahl, Bronze oder Grauguss, oder aus einem Kunststoff besteht, insbesondere aus PEEK, gefülltes PTFE oder Hochtemperaturpolymere wie PEEK, PI oder Epoxid.

## Claims

1. A seal arrangement (1) for piston compressors comprising a deformable ring carrier (2) as well as comprising a first and a second continuous sealing ring (3a, 3b), wherein the ring carrier (2) has a longitudinal axis (L) extending perpendicular to its peripheral direction, and wherein the ring carrier (2) has a gap (2i) with clearance in its peripheral direction, and wherein each sealing ring (3a, 3b) has a longitudinal axis (3c, 3d) extending perpendicular to its peripheral direction, and wherein the sealing rings (3a, 3b) are arranged such that the ring carrier (2) surrounds them from the outside, and wherein the two sealing rings (3a, 3b) are arranged next to one another in the direction of extent of the longitudinal axis (L), and wherein the ring carrier (2) and the sealing rings (3a, 3b) are designed mutually adapted such that the first sealing ring (3a) contacts a first side wall (2d) of the ring carrier (2) at the one side and forms a first gap (S1) toward the ring carrier (2) at the side disposed opposite with respect to the longitudinal axis (3c) of the first sealing ring (3a), and wherein the second sealing ring (3b) mirror-inverted contacts a second side wall (21) of the ring carrier (2) at the one side and forms a second gap (S2) toward the ring carrier (2) on the side disposed opposite with respect to the longitudinal axis (3d) of the second sealing ring (3b), wherein the first and second side walls (2d, 21) are arranged opposite with respect to the longitudinal axis (L) so that the ring carrier (2) can effect a respective preload force (5a, 5b) on the first or second sealing ring (3a, 3b) respectively via the first or second side walls (2d, 21) respectively, wherein the preload forces (5a, 5b) extend in an opposite manner.

2. A seal arrangement (1) in accordance with claim 1, **characterized in that** the first and second sealing rings (3a, 3b) are arranged directly next to one another in the direction of extent of the longitudinal axis (L).

3. A seal arrangement (1) in accordance with claim 1, **characterized in that** the ring carrier (2) has an intermediate web (2k) between the first and second sealing rings (3a, 3b) in the direction of extent of the longitudinal axis (L).

4. A seal arrangement (1) in accordance with claim 3, **characterized in that** the intermediate web (2k) has an inner diameter which substantially corresponds to the inner diameter (R) of the first and second sealing rings (3a, 3b).

5. A seal arrangement (1) in accordance with any one of the preceding claims, **characterized in that** the first and/or second sealing ring (3a, 3b) has/have the same width (3k) along the total periphery; and **in that** the ring carrier (2) has a first and/or second side wall (2e, 2m) spaced apart with respect to the first and/or second sealing ring (3a, 3b) in the region of the first and/or second gap (S1, S2).

6. A seal arrangement (1) in accordance with any one of the claims 1 to 4, **characterized in that** the first contacting side wall (2d) and a first spaced apart side wall (2e) together extend in a circular or oval manner; **in that** the second contacting side wall (21) and a second spaced apart side wall (2m) together extend in a circular or oval manner; and **in that** the first and/or second sealing ring (3a, 3b) has/have such a variable width (3k) in the peripheral direction that the first gap (S1) is formed between the first sealing ring (3a) and the first spaced apart side wall (2e); and **in that** the second gap (S2) is formed between the second sealing ring (3b) and the second spaced apart wall (2m).

7. A seal arrangement (1) in accordance with one of the claims 5 or 6, **characterized in that** a first center / Z1) as well as a radius of curvature R2 define a semicircular extent of the first contacting side wall (2d); **in that** a second center (Z2) as well as a radius of curvature R3 define a semicircular extent of the first spaced apart side wall (2e); and **in that** the first and second centers (Z1, Z2) are mutually spaced apart.

8. A seal arrangement (1) in accordance with claim 7, **characterized in that** the two radii of curvature R2 and R3 are identical.

9. A seal arrangement (1) in accordance with one of the claims 7 or 8, **characterized in that** the distance between the first and second centers (Z1, Z2) lies in the range between 0.1 and 10 mm.

10. A seal arrangement (1) in accordance with any one of the preceding claims, **characterized in that** the first and/or second gap (S1, S2) has/have a maximum width in the range from 0.1 mm to 10 mm.

11. A seal arrangement in accordance with any one of the preceding claims, **characterized in that** the sealing rings (3a, 3b) are composed of a wearable material, in particular of a metal such as bronze, gray cast iron or sintered iron, or of a plastic such as PEEK, filled PTFE or high-temperature polymers such as PEEK, PI or epoxy.

12. A seal arrangement (1) in accordance with any one of the preceding claims, **characterized in that** the first and the second contacting side wall (2d, 21) extend over an angle of 180 degrees or approximately 180 degrees; and **in that** the first and the second gap (S1, S2) extend over an angle of 180 degrees or approximately 180 degrees.

13. A seal arrangement (1) in accordance with any one of the preceding claims, **characterized in that** the sealing ring (3a, 3b) has an inner radius (R) which is larger than or equal to the outer radius of a piston rod (6).

14. A seal arrangement (1) in accordance with any one of the preceding claims, **characterized in that** a clamping ring (4) surrounds the ring carrier (2) from the outside in the peripheral direction.

15. A seal arrangement (1) in accordance with any one of the preceding claims, **characterized in that** the ring carrier (2) is composed of a metal, in particular of steel, stainless steel, bronze or gray cast iron, or of a plastic, in particular PEEK, filled PTFE or high-temperature polymers such as PEEK, PI or epoxy.

## Revendications

1. Agencement d'étanchéité (1) pour compresseurs à piston, comprenant un porte-bagues (2) déformable ainsi qu'une première et une deuxième bague d'étanchéité sans fin (3a, 3b), dans lequel le porte-bagues (2) présente un axe longitudinal (L) s'étendant perpendiculairement à sa direction circonférentielle, et dans lequel le porte-bagues (2) présente une fente (2i) avec du jeu dans sa direction circonférentielle, et chaque bague d'étanchéité (3a, 3b) présente un axe longitudinal (3c, 3d) s'étendant perpendiculairement à sa direction circonférentielle, et dans lequel les bagues d'étanchéité (3a, 3b) sont disposées de façon que le porte-bagues (2) les entoure par l'extérieur, et dans lequel les deux bagues d'étanchéité (3a, 3b) sont disposées côte à côte dans la direction d'extension de l'axe longitudinal (L), et dans lequel le porte-bagues (2) et les bagues d'étanchéité (3a, 3b) sont conformés de manière à être mutuellement adaptés de façon que la première bague d'étanchéité (3a) soit en contact d'un côté avec une première paroi latérale (2d) du porte-bagues (2) et forme du côté opposé par rapport à l'axe longitudinal (3c) de la première bague d'étanchéité (3a) une première fente (S1) vers le porte-bagues (2), et dans lequel la deuxième bague d'étanchéité (3b) est symétriquement en contact d'un côté avec une deuxième paroi latérale (21) du porte-bagues (2) et forme du côté opposé par rapport à l'axe longitudinal (3d) de la deuxième bague d'étanchéité (3b) une deuxième fente (S2) vers le porte-bagues (2), dans lequel les première et deuxième parois latérales (2d, 21) sont disposées en face l'une de l'autre par rapport à l'axe longitudinal (L), de sorte que le porte-bagues (2) peut exercer par l'intermédiaire de la première, respectivement deuxième, paroi latérale (2d, 21) une force de précontrainte (5a, 5b) sur la première, respectivement deuxième, bague d'étanchéité (3a, 3b), les forces de précontrainte (5a, 5b) s'étendant à l'opposé l'une de l'autre.

2. Agencement d'étanchéité (1) selon la revendication 1, **caractérisé en ce que** les première et deuxième bagues d'étanchéité (3a, 3b) sont disposées directement côte à côte dans la direction d'extension de l'axe longitudinal (L).

3. Agencement d'étanchéité (1) selon la revendication 1, **caractérisé en ce que** le porte-bagues (2) présente un épaulement intermédiaire (2k) entre les première et deuxième bagues d'étanchéité (3a, 3b) dans la direction d'extension de l'axe longitudinal (L).

4. Agencement d'étanchéité (1) selon la revendication 3, **caractérisé en ce que** l'épaulement intermédiaire (2k) présente un diamètre intérieur qui correspond sensiblement au diamètre intérieur (R) des première et deuxième bagues d'étanchéité (3a, 3b).

5. Agencement d'étanchéité (1) selon une des revendications précédentes, **caractérisé en ce que** la première et/ou deuxième bague d'étanchéité (3a, 3b) présente la même largeur (3k) le long de toute la circonférence, et que le porte-bagues (2) présente dans la zone de la première et/ou deuxième fente (S1, S2) une première et/ou deuxième paroi latérale (2e, 2m) espacée par rapport à la première et/ou deuxième bague d'étanchéité (3a, 3b).

6. Agencement d'étanchéité (1) selon une des revendications 1 à 4, **caractérisé en ce que** la première paroi latérale en contact (2d) et une première paroi latérale espacée (2e) s'étendent en commun en forme de cercle ou d'ovale, que la deuxième paroi latérale en contact (21) et une deuxième paroi latérale espacée (2m) s'étendent en commun en forme de cercle ou d'ovale, et que la première et/ou deuxième bague d'étanchéité (3a, 3b) présente en direction circonférentielle une largeur (3k) variable de façon que la première fente (S1) soit formée entre la première bague d'étanchéité (3a) et la première paroi latérale espacée (2e), et que la deuxième fente (S2) soit formée entre la deuxième bague d'étanchéité (3b) et la deuxième paroi latérale espacée (2m).

7. Agencement d'étanchéité (1) selon une des revendications 5 ou 6, **caractérisé en ce qu'**un premier centre (Z1) ainsi qu'un rayon de courbure R2 définissent une extension semi-circulaire de la première paroi latérale en contact (2d), qu'un deuxième centre (Z2) ainsi qu'un rayon de courbure R3 définissent une extension semi-circulaire de la première paroi latérale espacée (2e), et que les premier et deuxième centres (Z1, Z2) sont mutuellement espacés.

8. Agencement d'étanchéité (1) selon la revendication 7, **caractérisé en ce que** les deux rayons de courbure R2 et R3 sont identiques.

9. Agencement d'étanchéité (1) selon une des revendications 7 ou 8, **caractérisé en ce que** la distance entre les premier et deuxième centres (Z1, Z2) est comprise entre 0,1 et 10 mm.

10. Agencement d'étanchéité (1) selon une des revendications précédentes, **caractérisé en ce que** la première et/ou deuxième fente (S1, S2) présente une largeur maximale comprise entre 0,1 mm et 10 mm.

11. Agencement d'étanchéité selon une des revendications précédentes, **caractérisé en ce que** les bagues d'étanchéité (3a, 3b) sont constituées d'un matériau abrasable, en particulier d'un métal tel que bronze, fonte grise ou fer fritté, ou d'une matière plastique telle que PEEK, PTFE chargé ou polymères haute température tels que PEEK, PI ou époxy.

12. Agencement d'étanchéité (1) selon une des revendications précédentes, **caractérisé en ce que** les première et deuxième parois latérales en contact (2d, 21) s'étendent sur un angle de 180 degré ou à peu près 180 degrés, et que les première et deuxième fente (S1, S2) s'étendent sur un angle de 180 degré ou à peu près 180 degrés.

13. Agencement d'étanchéité (1) selon une des revendications précédentes, **caractérisé en ce que** le rayon intérieur (R) de la bague d'étanchéité (3a, 3b) est supérieur ou égal au rayon extérieur d'une tige de piston (6).

14. Agencement d'étanchéité (1) selon une des revendications précédentes, **caractérisé en ce qu'**une bague de serrage (4) entoure le porte-bagues (2) par l'extérieur en direction circonférentielle.

15. Agencement d'étanchéité (1) selon une des revendications précédentes, **caractérisé en ce que** le porte-bagues (2) est constitué d'un métal, en particulier d'acier, acier inoxydable, bronze ou fonte grise, ou d'une matière plastique, en particulier de PEEK, PTFE chargé ou polymères haute température tels que PEEK, PI ou époxy.
